(19) Europäisches Patentamt
European Patent Office
Office européen des brevets

(11) EP 0 993 858 B1

(12) **FASCICULE DE BREVET EUROPEEN**

(45) Date de publication et mention de la délivrance du brevet:
**12.10.2005 Bulletin 2005/41**

(51) Int Cl.$^7$: **B01D 53/86**

(21) Numéro de dépôt: **99402399.2**

(22) Date de dépôt: **30.09.1999**

(54) **Procédé de diminution des émissions d'oxydes d'azote dans un milieu surstoéchiométrique en oxydants**

Verfahren zur Verringerung der Emissionen von Stickoxyden in einem an Oxydationsmitteln überstöchiometrischem Milieu

Process for reducing nitrogen oxide emissions in medium with excess of oxidants

(84) Etats contractants désignés:
**DE ES GB IT**

(30) Priorité: **12.10.1998 FR 9812740**

(43) Date de publication de la demande:
**19.04.2000 Bulletin 2000/16**

(73) Titulaire: **Institut Français du Pétrole**
**92852 Rueil-Malmaison Cedex (FR)**

(72) Inventeurs:
- **Bourges, Patrick**
  **26000 Valance (FR)**
- **Bouchez, Matthias**
  **92190 Meudon (FR)**
- **Mabilon, Gil**
  **78420 Carrières Sur Sein (FR)**
- **Martin, Brigitte**
  **69230 Saint Genis Laval (FR)**

(56) Documents cités:
**EP-A- 0 577 438**
**EP-A- 0 666 099**
**EP-A- 0 709 129**
**EP-A- 0 766 992**

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

Printed by Jouve, 75001 PARIS (FR)

EP 0 993 858 B1

## Description

La présente invention concerne un procédé d'élimination des oxydes d'azote (NO et $NO_2$, appelés $NO_x$) dans un milieu surstoechiométrique en oxydants.

Ce procédé concerne l'élimination des oxydes d'azote présents dans les gaz d'échappement de moteurs automobiles ou stationnaires fonctionnant en mélanges pauvres, qu'ils s'agissent des moteurs à allumage par compression ou des moteurs à allumage commandé à réglage pauvre. Ce procédé peut aussi être utilisé pour éliminer les oxydes d'azote des fumées de centrales thermiques, des incinérateurs de déchets ou des turbines à gaz. Ces gaz se caractérisent par des teneurs en oxydes d'azote de quelques dizaines à quelques milliers de parties par million (ppm), par des teneurs comparables en composés réducteurs (CO, $H_2$, hydrocarbures) mais surtout par des concentrations importantes en oxygène (de 1 à près de 20% volume).

La forte toxicité des oxydes d'azote, leur rôle dans la formation des pluies acides et de l'ozone troposphérique ont conduit à la mise en place de normes sévères limitant les rejets de ces composés. Pour satisfaire à ces normes il est généralement nécessaire d'éliminer au moins une partie de ces oxydes présents dans les gaz d'échappement des moteurs automobiles ou stationnaires, des turbines ou des centrales thermiques ou des incinérateurs.

Dans le cas des gaz d'échappement de moteurs, l'élimination des oxydes d'azote par décomposition thermique ou de préférence par décomposition catalytique est envisageable, mais les hautes températures exigées par cette réaction sont incompatibles avec celles des gaz d'échappement. Seule leur réduction est réalisable en utilisant les réducteurs présents, mais en faible quantités, dans le gaz d'échappement (CO, $H_2$, hydrocarbures imbrûlés ou dont la combustion a été imparfaite dans le moteur), mais également en utilisant des composés réducteurs complémentaires qu'il serait nécessaire d'injecter en amont du catalyseur. Ces agents de réduction sont des hydrocarbures, des alcools, des éthers ou autres composés oxygénés.

L'agent réducteur peut être le carburant du véhicule. De tels carburants peuvent être des essences, additivées ou non de composés oxygénés (par exemple les alcools, les éthers), des gazoles, des gaz liquéfiés (GPL) ou des gaz naturels comprimés (GNC).

La réduction du mono et du dioxyde d'azote (NO et $NO_2$) peut conduire selon les équations mentionnées ci-dessous, à la formation soit d'azote moléculaire ($N_2$), soit de protoxyde d'azote ($N_2O$).

$$\begin{array}{l} 2\,NO \\ \quad\quad + \text{Réducteur} \xrightarrow{(O_2)} N_2 + (CO_2,\ H_2O) \\ 2\,NO_2 \end{array}$$

$$\begin{array}{l} 2\,NO \\ \quad\quad + \text{Réducteur} \xrightarrow{(O_2)} N_2O + (CO_2,\ H_2O) \\ 2\,NO_2 \end{array}$$

L'azote moléculaire ($N_2$) est le produit inoffensif désiré alors que la formation du protoxyde d'azote ($N_2O$), composé non inerte, doit être évitée au maximum.

Les paramètres essentiels pour caractériser les performances du catalyseur en élimination des oxydes d'azote sont:

- la température pour laquelle la réaction est maximum
- la conversion ou taux d'élimination des $NO_x$
- les sélectivités en $N_2$ et $N_2O$
- et surtout le rendement $N_2$ de la réaction de réduction des NOx qui peut s'exprimer par la relation:

$$\text{Rendement } N_2 = 100 \times \frac{NO_x \text{ disparu} - 2 \times (N_2O \text{ formé})}{NO_x \text{ initial}}$$

### *Art antérieur*

La majorité des travaux sur la mise au point de catalyseurs actifs dans l'élimination des oxydes d'azote en milieu oxydant porte sur la mise en oeuvre de métaux de transition (généralement le cuivre) échangés sur des zéolites de rapports atomiques Si/Al généralement compris entre 3 et 100 et dont les structures peuvent être de types différents (mordénite, faujasite, ZSM5, etc.) (US-5 149 512). La stabilité thermique des catalyseurs au cuivre échangés sur zéolithe peut être améliorée par l'ajout d'éléments alcalino-terreux et de terres rares (le lanthane , P. Budi et al. Catalysis Letters 41 (1996) 47-53, et la cérine, Y. Zhang et al. Journal of Catalysis 194 (1996) 131-154). Il faut cependant noter que ces catalyseurs sont très sélectifs pour la réduction totale des oxydes d'azote en azote moléculaire (FR-A-2 655 565 et US-A-5 149 511). Ces catalyseurs sont actifs en conversion des oxydes d'azote pour des températures comprises entre 350 et 550°C.

De nombreux travaux sont réalisés avec des supports de type alumine. L'alumine présente l'avantage d'être stable dans les conditions des gaz d'échappement Diesel. L'alumine est active dans la réduction des $NO_x$ en azote par des hydrocarbures à des températures comprises entre 450°C et 750°C (Y. Kintaichi et al., Catalysis Let 6 (1990) 239-244 ; N. Okazaki et al., Catalysis Let 49 (1997) 169-174).

Les catalyseurs à base de métaux de transition échangés sur zéolithe ou de type alumine sont actifs en réduction des $NO_x$ à des températures supérieures à 350°C. Ces conditions limitent donc leur utilisation à la dépollution des gaz d'échappement des moteurs à essence à réglage pauvre et des moteurs Diesel poids lourds lorsque ceux-ci fonctionnent à pleine charge et à haut régime. Mais, pour les voitures Diesel légères, la température des gaz d'échappement est généralement comprise entre 150 et 400°C et dépasse rarement les 500°C, ce qui a pour conséquence une efficacité restreinte de ces catalyseurs en élimination des oxydes d'azote en condition normale d'utilisation du véhicule.

L'utilisation de métaux précieux comme phase active permet également d'éliminer une majeure partie des oxydes d'azote dans des proportions comparables à celles mesurées avec les catalyseurs au cuivre (EP-A1-0 709 129). Ces phases catalytiques présentent l'avantage d'être actives à des températures nettement plus basses (200 - 300°C), ce qui est un avantage primordial pour la dépollution des gaz d'échappement des voitures Diesel dont les températures en sortie de moteur sont généralement comprises entre 150 et 400°C.

Les métaux précieux peuvent être imprégnés sur différents supports tels que l'alumine, la silice, la zircone, l'oxyde de titane ou des zéolithes. Les catalyseurs au platine supportés sur zéolithe (ZSM-5) peuvent être préparés par échange ionique (EP-A1-0 709 129).

Les catalyseurs à base de platine sont en général très actifs à basse température en conversion des oxydes d'azote NO et $NO_2$. Cependant, la majorité de ces catalyseurs présentent le handicap de ne réaliser que partiellement la réduction des $NO_x$ à savoir que le produit majoritairement formé n'est pas l'azote moléculaire ($N_2$) mais le protoxyde d'azote ($N_2O$). De plus les catalyseurs supportés à base de platine réalisent la réduction des NOx sur une plage de température étroite, de 180°C à 350°C (R. Burch et al., Catalysis Today 25 (1995) 185-206).

Certains métaux catalytiques comme l'indium ou le zinc permettent la réduction de $NO_2$ en azote par des hydrocarbures alors que sur ces mêmes métaux la réduction de NO en azote par des hydrocarbures est très faible. M. Iwamoto et al. (Chemistry Letters (1997) 1283-1284 ; J. Chem. Soc., Chem. Commun. (1997) 37-38) proposent de réduire les $NO_x$ en utilisant deux catalyseurs distincts. Le premier catalyseur à base de platine permet l'oxydation de NO en $NO_2$. Le deuxième catalyseur du type Zn/zéolithe MFI ou In/zéolithe MFI, placé en aval du catalyseur d'oxydation, permet la réduction de $NO_2$ en $N_2$. Le réducteur est introduit dans le flux gazeux entre les deux lits catalytiques. Ce procédé permet la réduction des $NO_x$ entre 200 et 500°C en présence d'un excès d'oxygène et en absence d'eau. Mais l'activité en conversion des $NO_x$ de ce procédé est très fortement diminuée en présence d'eau, avec un flux gazeux représentatif d'un gaz d'échappement Diesel.

### *Description de l'invention*

L'objet de la présente invention concerne un procédé de diminution des émissions d'oxydes d'azote dans un milieu surstoechiométrique en oxydants, comprenant :

a) une étape d'oxydation d'au moins une partie des oxydes d'azote en présence d'un matériau d'oxydation,

b) une étape d'injection de composés organiques dont les molécules comprennent au moins un atome choisi parmi le carbone, l'hydrogène, l'oxygène et l'azote,

c) une étape d'adsorption d'au moins une partie desdits composés organiques sur un matériau d'adsorption sous forme d'espèces moléculaires et/ou de résidus carbonés,

d) une étape de réduction sélective d'au moins une partie des oxydes d'azote en azote moléculaire par au moins une partie des espèces moléculaires et/ou des résidus carbonés formés sur le matériau d'adsorption, selon la revendication 1 et son utilisation selon la revendication 16.

L'objet de la présente invention est un procédé de réduction des $NO_x$ qui permet d'obtenir de manière surprenante une efficacité comparable, sinon supérieure à celles des formulations de l'art antérieur, pour l'élimination des oxydes d'azote, dès les basses températures et sur une plage de température très large (150 - 550°C), dans un mélange gazeux fortement oxydant, et qui présente, en outre, un rendement nettement amélioré en azote moléculaire grâce à une bonne sélectivité de la conversion des oxydes d'azote en azote moléculaire au détriment de la formation non désirée de protoxyde d'azote ($N_2O$).

Le procédé de la présente invention permet de réaliser la réduction des $NO_x$ avec des taux de conversion élevés à des températures équivalentes ou inférieures à celle requises avec des catalyseurs conventionnels préparés par échange de métaux de transition ou de métaux nobles, en particulier le cuivre ou le platine, sur des zéolithes, et avec des rendements en azote améliorés par rapport aux catalyseurs préparés à base de métaux précieux sur différents supports.

Le procédé de l'invention permet également de réaliser cette réduction des oxydes d'azote en utilisant comme agent réducteur le carburant du véhicule.

La première étape a) du procédé de l'invention peut être effectuée, de manière générale, en présence d'un matériau d'oxydation des $NO_x$ comprenant

- au moins un oxyde inorganique réfractaire;
- au moins un élément (A) appartenant aux groupes VIB, VIIB, VIII et IB des métaux de transition et des métaux précieux.

L'oxyde inorganique réfractaire comprend généralement au moins un composé choisi dans le groupe formé par les composés ci-après : les zéolithes, l'alumine, la silice, la silice - alumine, l'oxyde de titane, l'oxyde de zirconium, un oxyde mixte ou une solution solide d'au moins deux des oxydes précités, ou le mélange d'au moins deux de ces composés. Parmi les oxydes inorganiques réfractaires précités, la demanderesse privilégie l'alumine.

Les éléments (A) appartenant aux groupes VIB, VIIB, VIII et IB des métaux de transition et des métaux précieux sont de préférence le cuivre, le nickel, le cobalt, le fer, le manganèse, le chrome, le molybdène, le platine, le rhodium, le ruthénium, l'iridium, le palladium ou le mélange d'au moins deux de ces éléments. Cependant, la demanderesse privilégie le platine.

Plus particulièrement, la composition massique du matériau d'oxydation, exprimée en pourcent masse par rapport à la masse totale de ladite phase active calcinée à 550°C pendant 4 h, est généralement la suivante:

- de 90 à 99,9 % d'au moins un oxyde inorganique réfractaire;
- de 0,1 à 10 % d'au moins un élément (A) appartenant aux groupes VIB, VIIB, VIII et IB des métaux de transition et des métaux précieux .

Généralement, cette première étape est mise en oeuvre dans une première portion du conduit d'échappement des gaz d'échappement.

La deuxième étape b) du procédé selon l'invention, peut être définie, d'une manière générale, par l'injection de composés réducteurs. Les composés réducteurs sont choisis parmi les hydrocarbures, les alcools, les éthers ou d'autres produits organiques oxygénés, et les composés réducteurs peuvent également être choisis parmi les carburants consommés par le moteur ou la turbine.

La demanderesse privilégie, parmi les composés réducteurs, l'heptanal et le dicyclopentadiène.

La deuxième étape a généralement lieu dans la ligne d'échappement en aval du matériau d'oxydation de $NO_x$ utilisés dans la première étape.

L'étape c) du procédé selon l'invention est réalisée, de manière générale, en présence d'un matériau permettant l'adsorption des composés organiques dont les molécules comprenent au moins un atome choisi parmi le carbone, l'hydrogène, l'oxygène, sous forme d'espèces moléculaires ou de résidus carbonés comprenant :

- au moins un oxyde inorganique réfractaire comprenant au moins un composé choisi parmi : les zéolithes appartenant au groupe formé par NU-86, NU-87, EU-1, et Y, l'alumine, la silice, la silice-alumine, l'oxyde de titane, l'oxyde de zirconium, un oxyde mixte ou une solution solide d'au moins deux des oxydes précités, ou le mélange d'au moins deux de ces composés;
- et éventuellement au moins un élément (B) appartenant au groupe IIA des alcalino- terreux ou au groupe IIIB des terres rares.

Dans un premier mode de réalisation de l'invention, le matériau choisi parmi les matériaux permettant l'adsorption des composés organiques sous forme d'espèces moléculaires ou de résidus carbonés comprend de l'alumine.
Plus particulièrement, la composition massique du matériau permettant l'adsorption des composés organiques sous forme d'espèces moléculaires ou de résidus carbonés, exprimée en pourcent masse par rapport à la masse totale de ladite phase active calcinée à 550°C pendant 4 h, est la suivante:

- de 90 à 100 % d'au moins un oxyde réfractaire;
- de 0 à 10 % d'au moins un élément (B) appartenant groupe IIA des alcalino-terreux, au groupe IIIB des terres rares.

L'étape c) est généralement mise en oeuvre sur la ligne d'échappement en aval du dispositif d'injection des composés organiques.
L'étape d) de réduction des oxydes d'azote en azote moléculaire par au moins une partie des espèces moléculaires et des résidus carbonés formés sur le matériau d'adsorption permet de réduire en azote moléculaire au moins une partie des oxydes d'azotes oxygénés à l'étape a) et au moins une partie des oxydes d'azotes non oxygénés à l'étape a).
Les catalyseurs d'oxydation de l'étape a) et les catalyseurs d'adsorption des composés organiques de l'étape c) décrits dans le procédé de l'invention se présentent soit sous forme de billes, de pastilles ou d'extrudés, soit sous forme monolithique (phase active déposée sur un support céramique ou métallique).
Les étapes de la préparation du catalyseur d'oxydation utilisé dans l'étape a) sont les suivantes:

- une ou plusieurs étapes d'imprégnation d'un support comprenant au moins un oxyde réfractaire par au moins un précurseur d'au moins un élément (A)

- éventuellement une étape de traitement thermique en milieu oxydant, neutre ou réducteur après chaque étape d'imprégnation, à une température comprise entre 200 et 700 °C.

Les éléments (A) sont introduits par imprégnation de solutions aqueuses ou organiques de précurseurs de métal ou d'oxydes de ces éléments, selon les techniques connues de l'homme de l'art, dites à sec ou avec excès.
Les précurseurs des métaux de transition (A) sont choisis parmi les nitrates, les acétates et les formiates, en solutions aqueuses, et les acétylacétonates, qui peuvent être mis en oeuvre en milieu organique. Les précurseurs des métaux précieux (A) sont ceux classiquement utilisés pour la préparation de catalyseurs, en particulier et quand ils existent, les chlorures, les homologues acides des chlorures, les complexes chlorés, les nitrates, les complexes aminés, les acétylacétonates. A titre d'exemples non limitatifs on peut citer l'acide hexachloroplatinique, le chlorure de platine tétrammine, le dinitroso-diammino platine, l'acide hexachloro-iridique, le trichlorure de ruthénium, le dichlorure de ruthénium pentammine.
Les étapes de la préparation du catalyseur d'adsorption des composés organiques utilisés dans l'étape c) du procédé selon la présente invention sont les suivantes:

- préparation du support comprenant au moins un oxyde réfractaire ;

- éventuellement l'ajout d'un élément (B) appartenant au groupe IIA des alcalino-terreux, au groupe IIIB des terres rares par imprégnation par au moins un précurseur d'au moins un élément appartenant aux groupes IIA et IIIB du tableau périodique ; et

- éventuellement une étape de traitement thermique en milieu oxydant, neutre ou réducteur après chaque étape d'imprégnation, à une température comprise entre 200 et 700 °C.

Lorsque le catalyseur en comprend, les éléments (B) sont ajoutés à l'oxyde inorganique réfractaire par imprégnation de solutions aqueuses ou organiques de précurseurs de métal ou d'oxydes de ces éléments, selon les techniques connues de l'homme de l'art, dites à sec ou avec excès.
Les précurseurs de l'élément (B) appartenant au groupe IIA des alcalino-terreux peuvent être introduits sous forme de pigments, tels que les oxydes, les carbonates ou les sulfates. Mais d'une façon préférée, on imprègne des précurseurs de ces éléments sur l'oxyde réfractaire. Dans ce cas, les sels solubles dans l'eau utilisés sont, de préférence, les nitrates, les acétates et les formiates. Les précurseurs de l'élément (B) appartenant au groupe IIIB des terres rares pouvant être introduits sous forme de pigments, sont alors des carbonates, des oxalates ou des sulfates ; mais d'une façon préférée on réalisera une imprégnation d'une solution aqueuse d'au moins un de leurs précurseurs, tels que les nitrates.
Le conditionnement des catalyseurs d'oxydation de l'étape a) et des catalyseurs d'adsorption des composés

organiques de l'étape c), sous forme de billes, d'extrudés ou de pastilles, peut être réalisé à n'importe quel stade de la préparation. Cependant la demanderesse préfère que l'étape de mise en forme soit réalisée directement sur l'oxyde inorganique réfractaire avant toute modification, ou encore après toutes les étapes d'imprégnation et de calcination.

Pour l'utilisation sur véhicule, il est souvent préférable de mettre en oeuvre des supports rigides (monolithes) présentant une porosité ouverte importante (supérieure à 70%) afin de limiter les pertes de charge que pourraient engendrer les forts débits de gaz, mais surtout les grandes vitesses spatiales des gaz d'échappement. En effet, ces pertes de charge pénalisent le bon fonctionnement du moteur et contribuent à abaisser le rendement d'un moteur à combustion interne (essence ou Diesel). Par ailleurs, la ligne d'échappement étant soumise à des vibrations ainsi qu'à des chocs mécaniques et thermiques importants, les catalyseurs en billes, en pastilles ou en extrudés risquent de subir des détériorations soit par attrition soit par fracturation.

Ces monolithes peuvent être:

- soit en céramique dont les éléments principaux peuvent être l'alumine, la zircone, la cordiérite, la mullite, la silice, les alumino-silicates ou la combinaison de plusieurs de ces composés,
- soit en carbure et/ou nitrure de silicium,
- soit en titanate d'aluminium,
- soit en métal. Ils sont alors obtenus à partir d'alliages de fer, chrome et aluminium dopés éventuellement par du nickel, du cobalt, du cérium ou de l'yttrium.

Les supports métalliques peuvent être réalisés par l'enroulement de feuillards ondulés ou par l'empilement de feuilles métalliques également ondulées, constituant une structure en nid d'abeille à canaux droits ou à canaux en zig zag communiquant entre eux ou non. Ils peuvent être également réalisés à partir de fibres ou de fils métalliques enchevêtrés, tissés ou tressés.

Pour les supports en métal renfermant de l'aluminium dans leur composition, il est recommandé de les prétraiter à haute température (par exemple entre 700 et 1100°C) afin de développer en surface une micro-couche d'alumine réfractaire. Cette micro-couche superficielle, de porosité et de surface spécifique supérieure à celle du métal d'origine favorise l'accrochage de la phase active tout en protégeant le reste du support contre la corrosion.

Ainsi le procédé selon l'invention, dans un mode de réalisation particulier, peut être mis en oeuvre avec au moins un catalyseur comprenant un support monolithique. Le catalyseur d'oxydation utilisé à l'étape a) peut être à base de support monolithique ou non, indépendamment du catalyseur utilisé dans l'étape c) et le catalyseur d'adsorption utilisé à l'étape c) peut être à base de support monolithique ou non, indépendamment du catalyseur utilisé dans l'étape a).

Les catalyseurs sont préparés par enduction de ces supports monolithiques par une suspension renfermant tout ou partie des éléments constituant la phase catalytique. Les éléments non introduits dans les étapes précédentes sont imprégnés en une ou plusieurs étapes sur le monolithe enduit, sous forme d'une solution de leurs sels précurseurs.

Les différentes étapes d'une méthode de préparation du catalyseur d'oxydation de l'étape a) et du catalyseur d'adsorption des composés organiques de l'étape c) sur support monolithique consiste à enduire le support par l'oxyde inorganique réfractaire, puis à imprégner successivement les précurseurs des différents éléments constituant la phase catalytique. Chacune de ces imprégnations est suivie d'un traitement thermique spécifique qui a pour but de stabiliser et de conditionner la phase préalablement constituée, dans un état ou l'interaction avec la phase suivante soit la plus appropriée.

L'oxyde inorganique est enduit sur le support monolithique en céramique ou en métal selon une technique connue de l'homme de l'art. La technique d'enduction consiste à préparer une suspension aqueuse de cet oxyde avec un composé minéral ou organique qui permet de fixer cet oxyde sur le support. En général ce composé, appelé liant, est un gel d'alumine (boehmite) ou un sol de silice, que l'on ajoute dans la suspension renfermant un acide organique ou minéral (agent peptisant). L'opération de dépôt de cet oxyde est réalisée par immersion du monolithe dans la suspension, par circulation de la suspension dans le monolithe ou par pulvérisation de cette suspension sur le monolithe. Après élimination de l'excédent de suspension, le film d'oxyde est fixé sur le support par séchage puis calcination de l'ensemble à une température généralement comprise entre 300 et 900°C, de préférence entre 400 et 600°C.

La quantité de phase catalytique (ou phase active) déposée sur le support monolithique (ou substrat) est généralement comprise entre 20 et 300g par litre dudit support et avantageusement entre 50 et 200g.

***EXEMPLES***

Les exemples 1 à 4 qui suivent illustrent l'invention sans toutefois en limiter la portée. Les exemples 5 à 10 décrivent le procédé de réduction des $NO_x$ selon l'art antérieur. Les exemples 11 et 12 décrivent le procédé de réduction des $NO_x$ selon l'art antérieur décrit par M. Iwamoto et al. (Chemistry Letters (1997) 1283-1284 ; J. Chem. Soc., Chem. Commun. (1997) 37-38).

A titre de comparaison, tous ces catalyseurs sont testés (exemple 13) au laboratoire en micro-unité avec un

mélange de gaz synthétique.

Dans tous les exemples, la désignation de phase active (ou phase catalytique) déposée sur le support (ou substrat) correspond à la somme des éléments constituant le catalyseur décrit dans la procédure ci-dessous, à savoir: l'oxyde inorganique réfractaire, les oxydes de métaux de transition, les métaux précieux, les oxydes des éléments alcalino-terreux et les terres rares. La masse de substrat monolithique en céramique ou en métal n'est pas prise en compte dans l'expression des teneurs massiques de chacun des constituants de cette phase catalytique.
Selon les habitudes de l'homme de l'art les quantités de métal précieux présentes dans le catalyseur seront généralement exprimées en gramme par litre de support.

**Exemple 1 (invention)**

Le procédé de réduction des $NO_x$ met en oeuvre :

dans l'étape (a), un catalyseur d'oxydation du type Pt/alumine. La masse de phase active déposée sur le support monolithique est de 120 g/l de support monolithique (la teneur en platine est de 1,2 g/l de support monolithique),

dans l'étape (b) une injection de composés organiques permettant d'injecter de l'heptanal et,

dans l'étape (c) un matériau d'adsorption des composés organiques de type alumine. La masse d'alumine déposée sur le support monolithique est de 120 g/l de support monolithique.

**Exemple 2 (invention)**

Le procédé de réduction des $NO_x$ met en oeuvre :

dans l'étape (a) un catalyseur d'oxydation du type Pt/alumine. La masse de phase active déposée sur le support monolithique est de 120 g/l de support monolithique (la teneur en platine est de 1,2 g/l de support monolithique),

dans l'étape (b) une injection de composés organiques permettant d'injecter du cyclopentadiène et,

dans l'étape (c) un matériau d'adsorption des composés organiques de type alumine (la masse d'alumine déposée sur le support monolithique est de 120 g/l de support monolithique).

**Exemple 3 (invention)**

Le procédé de réduction des $NO_x$ met en oeuvre :

dans l'étape (a) en amont du flux gazeux, un catalyseur d'oxydation du type Pt/alumine (la masse de phase active déposée sur le support monolithique est de 120 g/l de support monolithique et la teneur en platine est de 1,2 g/l de support monolithique).

dans l'étape (b) une injection de composés organiques permettant d'injecter de l'heptanal et,

dans l'étape (c) un matériau d'adsorption des composés organiques de type zéolithe Nu87 (la masse de zéolithe déposée sur le support monolithique est de 120 g/l de support monolithique).

**Exemple 4 (invention)**

Le procédé de réduction des $NO_x$ met en oeuvre :

dans l'étape (a) un catalyseur d'oxydation du type Pt/alumine. La masse de phase active déposée sur le support monolithique est de 120 g/l de support monolithique (la teneur en platine est de 1,2 g/l de support monolithique),

dans l'étape (b) une injection de composés organiques permettant d'injecter du cyclopentadiène et,

dans l'étape (c) un matériau d'adsorption des composés organiques de type zéolithe Nu87 (la masse de zéolithe déposée sur le support monolithique est de 120 g/l de support monolithique).

**Exemple 5 (comparatif)**

Le procédé de réduction des $NO_x$ met en oeuvre :

dans l'étape (a) une injection de composés organiques permettant d'injecter de l'heptanal,

dans l'étape (b) un matériau d'adsorption des composés organiques de type alumine (la masse d'alumine déposée sur le support monolithique est de 120 g/l de support monolithique).

**Exemple 6 (comparatif)**

Le procédé de réduction des $NO_x$ met en oeuvre :

dans l'étape (a) une injection de composés organiques permettant d'injecter du cyclopentadiène,

dans l'étape (b) un matériau d'adsorption des composés organiques de type alumine (la masse d'alumine déposée sur le support monolithique est de 120 g/l de support monolithique).

**Exemple 7 (comparatif)**

Le procédé de réduction des $NO_x$ met en oeuvre :

dans l'étape (a) une injection de composés organiques permettant d'injecter de l'heptanal,

dans l'étape (b) un matériau d'adsorption des composés organiques de type zéolithe Nu87 (la masse de zéolithe déposée sur le support monolithique est de 120 g/l de support monolithique).

**Exemple 8 (comparatif)**

Le procédé de réduction des $No_x$ met en oeuvre :

dans l'étape (a) une injection de composés organiques permettant d'injecter du cyclopentadiène,

dans l'étape (b) un matériau d'adsorption des composés organiques de type zéolithe Nu87 (la masse de zéolithe déposée sur le support monolithique est de 120 g/l de support monolithique).

**Exemple 9 (comparatif)**

Le procédé de réduction des $NO_x$ met en oeuvre :

dans l'étape (a) une injection de composés organiques permettant d'injecter de l'heptanal,

dans l'étape (b) un catalyseur du type Pt/alumine. La masse de phase active déposée sur le support monolithique est de 120 g/l de support monolithique (la teneur en platine est de 1,2 g/l de support monolithique).

**Exemple 10 (comparatif)**

Le procédé de réduction des $NO_x$ met en oeuvre :

dans l'étape (a) une injection de composés organiques permettant d'injecter du cyclopentadiène.

dans l'étape (b) un catalyseur du type Pt/alumine. La masse de phase active déposée sur le support monolithique est de 120 g/l de support monolithique (la teneur en platine est de 1,2 g/l de support monolithique).

**Exemple 11 (comparatif)**

Le procédé de réduction des $NO_x$ met en oeuvre :

a) un catalyseur d'oxydation du type Pt/alumine. La masse de phase active déposée sur le support monolithique est de 120 g/l de support monolithique (la teneur en platine est de 1,2 g/l de support monolithique),

b) une injection de composés organiques permettant d'injecter de l'heptanal et,

c) un catalyseur du type In /zéolithe MFI. La masse de phase active déposée sur le support monolithique est de 120 g/l de support monolithique (la teneur en indium est de 12 g/l de support monolithique).

**Exemple 12 (comparatif)**

Le procédé de réduction des $NO_x$ met en oeuvre :

a) un catalyseur d'oxydation du type Pt/alumine. La masse de phase active déposée sur le support monolithique est de 120 g/l de support monolithique (la teneur en platine est de 1,2 g/l de support monolithique),

b) une injection de composés organiques permettant d'injecter de l'heptanal et,

c) un catalyseur du type Zn /zéolithe MFI. La masse de phase active déposée sur le support monolithique est de 120 g/l de support monolithique (la teneur en zinc est de 10 g/l de support monolithique).

**Exemple 13**

Les catalyseurs préparés sur supports céramique sont testés au laboratoire dans une micro-unité avec un mélange de gaz synthétique renfermant les principales familles de composés présents dans un gaz d'échappement d'un moteur Diesel. Les conditions opératoires sont les suivantes:

| | |
|---|---|
| **vitesse spatiale** (VVH) | $50000 h^{-1}$ |
| **composition du mélange:** | |
| $NO_x$ | 600ppm |
| composés organiques | 6000ppmC (équivalent méthane) |
| $O_2$ | 5% |
| $CO_2$ | 10% |
| CO | 500ppm |
| $H_2O$ | 10% |
| $SO_2$ | 20ppm |
| $N_2$ | complément à 100% |
| **température** | montée de 150 à 500°C |
| | (5°C/min.) |

Dans le cas des exemples n° 1, 3, 5, 7, 9, 11 et 12 le composé organique utilisé est l'heptanal. Dans le cas des exemples n° 2, 4, 6, 8 et 10, le composé organique utilisé est le dicyclopentadiène.

L'analyse des principaux composants est réalisée en continu à la sortie du réacteur par des analyseurs à détection infrarouge pour le monoxyde de carbone (CO) et le protoxyde d'azote ($N_2O$), par ionisation de flamme pour les composés organiques (HC) et par chimiluminescence pour les oxydes d'azote (NO et $NO_2$).

Ces résultats d'analyse permettent de déterminer les évolutions de la conversion des oxydes d'azote, de la sélectivité en protoxyde d'azote et du rendement azote en fonction de l'évolution de la température de réaction.

Les formules de calcul pour ces trois paramètres (exprimés en %) sont les suivantes :

$$\text{Conversion } NO_x : C = 100 \text{ x } (NO_x \text{ entrée} - NO_x \text{ sortie}) / NO_x \text{ entrée}$$

Sélectivité $N_2O$ : S = 100 x (2 x $N_2O$ formé) / $NO_x$ disparu

Rendement $N_2$ : R = C x (100-S) / 100

Avant la réalisation des tests catalytiques, les catalyseurs préparés sur supports céramiques subissent un traitement thermique selon les conditions suivantes. Le catalyseur est placé 8h à 600°C sous un flux constitué de 18% d'oxygène, de 10% d'eau et du complément en azote. Les catalyseurs ayant subi ce traitement thermique sont testés dans une micro-unité avec un mélange de gaz synthétique renfermant les principales familles de composés présents dans un gaz d'échappement d'un moteur Diesel, selon les conditions opératoires décrites ci-dessus.

Dans le tableau I ci-dessous sont rassemblés les valeurs des températures et des trois paramètres, "Conversion $NO_x$", " Sélectivité $N_2O$", " Rendement $N_2$" , calculés pour les conditions de tests correspondant aux plus faibles émissions en $NO_x$ à la sortie du catalyseur (conversion les plus fortes). De plus le domaine de température sur lequel la conversion des $NO_x$ est supérieur à 20% est noté dans la colonne "Plage de Temp. avec Conversion - $NO_x$ >20%".

Tableau I

| Tests catalytiques en micro - unité | | | | | |
|---|---|---|---|---|---|
| Procédé de l'exemple | Conversion $NO_x$ max, (%) | Sélectivité $N_2O$ (%) | Rendement $N_2$ (%) | Température Conversion Max, (°C) | Plage de Temp. avec Conversion $NO_x$ > 20% |
| 1 (inv.) | 50 | 10 | 45 | 290 | 200 à 550°C |
| 2 (inv.) | 40 | 5 | 38 | 310 | 190 à 550°C |
| 3 (inv.) | 45 | 15 | 38 | 260 | 210 à 540°C |
| 4 (inv.) | 35 | 5 | 33 | 300 | 215 à 530°C |
| 5 (comp.) | 37 | 1 | 36 | 600 | 520 à 680°C |
| 6 (comp.) | 36 | 1 | 35 | 605 | 525 à 680 °C |
| 7 (comp.) | 31 | 1 | 30 | 480 | 430 à 505°C |
| 8 (comp.) | 30 | 1 | 29 | 485 | 435 à 510°C |
| 9 (comp.) | 35 | 60 | 14 | 240 | 230 à 255 °C |
| 10 (comp.) | 30 | 50 | 15 | 260 | 250 à 275 °C |
| 11 (comp.) | 35 | 5 | 33 | 440 | 360 à 510 °C |
| 12 (comp.) | 33 | 5 | 31 | 430 | 350 à 500 °C |

On constate que le procédé de l'invention permet d'obtenir la réduction des $NO_x$ dès les basses températures sur une plage de température très large, contrairement aux procédés de l'art antérieur. De plus, même si la conversion des $NO_x$ est réalisée à basse température, la sélectivité de la réduction en $N_2O$ reste faible.

Par conséquent, le procédé de l'invention est donc plus performant pour la réaction de réduction de tous les composés oxygénés de l'azote en azote moléculaire : les rendements en azote sont les plus élevés dans le domaine de température 200 à 550 °C.

## Revendications

1. Procédé de réduction des oxydes d'azote en azote moléculaire dans un milieu surstoechiométrique en oxydants, comprenant :

   a) une étape d'oxydation d'au moins une partie des oxydes d'azote en présence d'un matériau d'oxydation,
   b) une étape d'injection de composés organiques dont les molécules comprennent au moins un atome choisi parmi le carbone, l'hydrogène, l'oxygène et l'azote, et réalisée en aval dudit matériau d'oxydation,
   c) une étape d'adsorption d'au moins une partie desdits composés organiques sur un matériau d'adsorption

sous forme d'espèces moléculaires et/ou de résidus carbonés, le matériau d'adsorption comprenant au moins un oxyde inorganique réfractaire comprenant au moins un composé choisi parmi les zéolithes appartenant au groupe formé par NU-86, NU-87, EU-1 et Y, l'alumine, la silice, la silice-alumine, l'oxyde de titane, l'oxyde de zirconium, un oxyde mixte ou une solution solide d'au moins deux des oxydes précités ou le mélange d'au moins deux de ces composés,
d) une étape de réduction sélective d'au moins une partie des oxydes d'azote en azote moléculaire par au moins une partie des espèces moléculaires et/ou des résidus carbonés formés sur le matériau d'adsorption.

**2.** Procédé selon la revendication 1, dans lequel le matériau d'oxydation des oxydes d'azote de l'étape a) comprend :

- au moins un oxyde inorganique réfractaire;
- au moins un élément (A) appartenant aux groupes VIB, VIIB, VIII et IB des métaux de transition et des métaux précieux.

**3.** Procédé selon l'une des revendications 1 à 2, dans lequel l'oxyde inorganique réfractaire du matériau d'oxydation de l'étape a) comprend au moins un composé choisi parmi les zéolithes, l'alumine, la silice, la silice-alumine, l'oxyde de titane, l'oxyde de zirconium, un oxyde mixte.

**4.** Procédé selon l'une des revendications 1 à 3, dans lequel l'oxyde inorganique réfractaire du matériau d'oxydation de l'étape a) comprend de l'alumine.

**5.** Procédé selon l'une des revendications 1 à 4, dans lequel l'élément (A) du matériau d'oxydation de l'étape a) est le platine.

**6.** Procédé selon l'une des revendications 1 à 5 dans lequel le matériau d'adsorption des composés organiques utilisés dans l'étape c) comprend au moins un élément (C) appartenant au groupe IIA des alcalino terreux, au groupe IIIB des terres rares.

**7.** Procédé selon l'une des revendications 1 à 6, dans lequel l'oxyde inorganique réfractaire du matériau d'adsorption de l'étape c) comprend au moins une zéolithe.

**8.** Procédé selon l'une des revendications 1 à 7, dans lequel l'oxyde inorganique réfractaire du matériau d'adsorption de l'étape c) comprend au moins une alumine.

**9.** Procédé selon l'une des revendications 1 à 8, tel que les composés organiques injectés dans l'étape b) comprennent au moins un composé choisi parmi les hydrocarbures, les alcools, les éthers, les produits organiques oxygénés et les carburants.

**10.** Procédé selon l'une des revendications 1 à 9, tel que les composés organiques injectés à l'étape b) comprennent de l'heptanal.

**11.** Procédé selon l'une des revendications 1 à 10, tel que les composés organiques injectés à l'étape b) comprennent du dicyclopentadiène.

**12.** Procédé selon l'une des revendications 1 à 11, dans lequel le matériau d'oxydation de l'étape a) se présente sous forme de billes, d'extrudés ou de pastilles.

**13.** Procédé selon l'une des revendications 1 à 12, dans lequel le matériau d'adsorption utilisé dans l'étape c) se présente sous forme de billes, d'extrudés ou de pastilles.

**14.** Procédé selon l'une des revendications 1 à 13, dans lequel le matériau d'oxydation utilisé à l'étape a) est supporté sur un substrat monolithique.

**15.** Procédé selon l'une des revendications 1 à 14 dans lequel le matériau d'adsorption utilisé à l'étape c) est supporté sur un substrat monolithique.

**16.** Utilisation de ce procédé de diminution des émissions d'oxydes d'azote selon l'une des revendications 1 à 15, par les moteurs stationnaires, les véhicules à moteur Diesel, les véhicules à essence à mélange pauvre et par les

turbines fonctionnant au gaz naturel (GNC) ou liquéfiés (GPL) ou encore avec un carburant liquide.

## Patentansprüche

**1.** Verfahren zur Reduktion der Stickoxide zu molekularem Stickstoff in einem an Oxidationsmitteln überstöchiometrischen Gemisch, umfassend:

a) eine Oxidationsstufe von wenigstens einem Teil der Stickoxide in Gegenwart eines Oxidationsmaterials,

b) eine Stufe zum Einspritzen von organischen Verbindungen, deren Moleküle wenigstens ein Atom umfassen, das unter Kohlenstoff, Wasserstoff, Sauerstoff und Stickstoff gewählt ist, und durchgeführt stromabwärts des Oxidationsmaterials,

c) ein Stufe zur Adsorption von wenigstens einem Teil der organischen Verbindungen auf einem Adsorptionsmaterial in Form von molekularen Spezies und/oder kohlenstoffhaltigen Rückständen, wobei das Adsorptionsmaterial wenigstens ein feuerfestes anorganisches Oxid umfasst, das wenigstens eine Verbindung umfasst, die gewählt ist unter den Zeolithen, die zu der Gruppe gehören, die gebildet werden durch NU-86, NU-87, EU-1 und Y, Aluminiumoxid, Siliziumoxid, Siliziumoxid-Aluminiumoxid, Titanoxid, Zirkoniumoxid, einem gemischten Oxid oder einer festen Lösung von wenigstens zwei der vorgenannten Oxide oder dem Gemisch von wenigstens zwei dieser Verbindungen,

d) eine Stufe zur selektiven Reduktion von wenigstens einem Teil der Stickoxide zu molekularem Stickstoff durch wenigstens einen Teil der molekularen Spezies und/oder der auf dem Adsorptionsmaterial gebildeten kohlenstoffhaltigen Rückstände.

**2.** Verfahren nach Anspruch 1, bei dem das Material zur Oxidation der Stickoxide der Stufe a) umfasst:

- wenigstens ein feuerfestes anorganisches Oxid;
- wenigstens ein Element (A), das zu den Gruppen VIB, VIIB, VIII und IB der Übergangsmetalle und der Edelmetalle gehört.

**3.** Verfahren nach einem der Ansprüche 1 bis 2, bei dem das feuerfeste anorganische Oxid des Oxidationsmaterials der Stufe a) wenigstens eine Verbindung umfasst, die gewählt ist unter den Zeolithen, Aluminiumoxid, Siliziumoxid, Siliziumoxid-Aluminiumoxid, Titanoxid, Zirkoniumoxid, einem gemischten Oxid.

**4.** Verfahren nach einem der Ansprüche 1 bis 3, bei dem das feuerfeste anorganische Oxid des Oxidationsmaterials der Stufe a) Aluminiumoxid umfasst.

**5.** Verfahren nach einem der Ansprüche 1 bis 4, bei dem das Element (a) des Oxidationsmaterials der Stufe a) Platin ist.

**6.** Verfahren nach einem der Ansprüche 1 bis 5, bei dem das Adsorptionsmaterial der in der Stufe c) verwendeten organischen Verbindungen wenigstens ein Element (C) umfasst, das zur Gruppe IIA der Erdalkalimetalle, zur Gruppe IIIB der Seltenerden gehört.

**7.** Verfahren nach einem der Ansprüche 1 bis 6, bei dem das feuerfeste anorganische Oxid des Adsorptionsmaterials der Stufe c) wenigstens einen Zeolith umfasst.

**8.** Verfahren nach einem der Ansprüche 1 bis 7, bei dem das feuerfeste anorganische Oxid des Adsorptionsmaterials der Stufe c) wenigstens ein Aluminiumoxid umfasst.

**9.** Verfahren nach einem der Ansprüche 1 bis 8, derart, dass die in der Stufe b) eingespritzten organischen Verbindungen wenigstens eine Verbindung umfassen, die gewählt ist unter den Kohlenwasserstoffen, den Alkoholen, den Ethern, den sauerstoffhaltigen organischen Produkten und den Treibstoffen.

**10.** Verfahren nach einem der Ansprüche 1 bis 9, derart, dass die bei der Stufe b) eingespritzten organischen Verbindungen Heptanal umfassen.

**11.** Verfahren nach einem der Ansprüche 1 bis 10, derart, dass die bei der Stufe b) eingespritzten organischen Verbindungen Dizyklopentadien umfassen.

**12.** Verfahren nach einem der Ansprüche 1 bis 11, bei dem das Oxidationsmaterial der Stufe a) in Form von Kugeln, Extrudaten oder Pastillen vorliegt.

**13.** Verfahren nach einem der Ansprüche 1 bis 12, in welchem das in der Stufe c) verwendete Adsorptionsmaterial in Form von Kugeln, Extrudaten oder Pastillen vorliegt.

**14.** Verfahren nach einem der Ansprüche 1 bis 13, bei dem das bei der Stufe a) verwendete Oxidationsmaterial auf einem monolithischen Substrat getragen ist.

**15.** Verfahren nach einem der Ansprüche 1 bis 14, bei dem das bei der Stufe c) verwendete Adsorptionsmaterial auf einem monolithischen Substrat getragen ist.

**16.** Verwendung dieses Verfahrens zur Verminderung der Stickoxidemissionen gemäß einem der Ansprüche 1 bis 15 durch die stationären Motoren, die Dieselmotorfahrzeuge, die Magergemischbenzinfahrzeuge und die mit Erdgas (GNC) oder Flüssiggas (GPL) oder auch mit einem Flüssigtreibstoff arbeitenden Turbinen.

## Claims

**1.** A process for reducing oxides of nitrogen into molecular nitrogen in a medium which is super-stoichiometric in oxidising agents, comprising:

a) a step for oxidising at least a portion of the oxides of nitrogen in the presence of an oxidation material;
b) a step for injecting organic compounds the molecules of which comprise at least one atom selected from carbon, hydrogen, oxygen and nitrogen, said step taking place downstream of the $No_x$ oxidation material used in the first step ;
c) a step for adsorbing at least a portion of said organic compounds onto an adsorption material in the form of molecular species and/or carbonaceous residues, said adsorption material comprising at least one refractory inorganic oxide comprising at least one compound selected from : zeolites being in the group formed by NU-86, NU-87, EU-1 and Y, alumina, silica, silica-alumina, titanium oxide, zirconium oxide, a mixed oxide or a solid solution of at least two of the above oxides, or a mixture of at least two of these compounds;
d) a step for selective reduction of at least a portion of the oxides of nitrogen to molecular nitrogen by at least a portion of the molecular species and/or carbonaceous residues formed on the adsorption material.

**2.** A process according to claim 1, in which the material for oxidising the oxides of nitrogen in step a) comprises:

- at least one refractory inorganic oxide;
- at least one element (A) from groups VIB, VIIB, VIII and IB, the transition metals and precious metals.

**3.** A process according to claim 1 or claim 2, in which the refractory inorganic oxide of the oxidation material of step a) comprises at least one compound selected from zeolites, alumina, silica, silica-alumina, titanium oxide, zirconium oxide and a mixed oxide.

**4.** A process according to any one of claims 1 to 3, in which the refractory inorganic oxide of the oxidation material of step a) comprises alumina.

**5.** A process according to any one of claims 1 to 4, in which element (A) of the oxidation material of step a) is platinum.

**6.** A process according to any one of claims 1 to 5, in which the material for adsorbing organic compounds used in step c) comprises at least one element (C) from group IIA, the alkaline-earths, or from group IIIB, the rare earths.

**7.** A process according to any one of claims 1 to 6, in which the refractory inorganic oxide of the adsorption material of step c) comprises at least one zeolite.

**8.** A process according to any one of claims 1 to 7, in which the refractory inorganic oxide of the adsorption material

of step c) comprises at least one alumina.

9. A process according to any one of claims 1 to 8, in which the organic compounds injected in step b) comprise at least one compound selected from hydrocarbons, alcohols, ethers, oxygen-containing organic products and fuels.

10. A process according to any one of claims 1 to 9, in which the organic compounds injected in step b) comprise heptanal.

11. A process according to any one of claims 1 to 10, in which the organic compounds injected in step b) comprise dicyclopentadiene.

12. A process according to any one of claims 1 to 11, in which the oxidation material of step a) is in the form of beads, extrudates or pellets.

13. A process according to any one of claims 1 to 12, in which the adsorption material used in step c) is in the form of beads, extrudates or pellets.

14. A process according to any one of claims 1 to 13, in which the oxidation material used in step a) is supported on a monolithic substrate.

15. A process according to any one of claims 1 to 14, in which the adsorption material used in step c) is supported on a monolithic substrate.

16. Use of this process for reducing oxides of nitrogen emissions according to any one of claims 1 to 15, by stationary engines, diesel engine vehicles, lean burn gasoline engine vehicles and by turbines functioning with natural gas (CNG) or liquefied gas (LPG) or with a liquid fuel.